# EUROPEAN PATENT SPECIFICATION

(11) **EP 1 578 645 B1**
(45) Date of publication and mention of the grant of the patent: **05.09.2007**
(21) Application number: 03781251.8
(22) Date of filing: 19.12.2003
(51) Int. Cl.: B60R 19/00, E01F 15/14

(54) **IMPACT ATTENUATING DEVICE FOR VEHICLE**
STOSSDÄMPFUNGSVORRICHTUNG FÜR EIN FAHRZEUG
DISPOSITIF D'ATTENUATION DES CHOCS POUR VEHICULE

(30) Priority: 20.12.2002 SE 0203813
(43) Date of publication of application: 28.09.2005
(73) Proprietor: VÄGVERKET, 781 87 Borlänge (SE)
(72) Inventor: CARLSSON, Arne, S-660 50 Valberg (SE)
(74) Representative: Hedefält, Dag
(86) International application number: PCT/SE2003/002036
(87) International publication number: WO 2004/056614

(56) References cited:
- WO-A1-01/87671
- US-A- 5 697 657
- US-A- 5 947 452
- US-A1- 2002 096 894

## Description

The present invention relates to an impact-attenuating device to be connected to a vehicle, especially an impact attenuator which is transported as a trailer.

An impact-attenuating device according to the preamble of claim 1 is disclosed in WO 01/87671 A1. The disclosed impact attenuator has a front member connecting the impact attenuator to a vehicle. The impact attenuator is connected in a transporting position, in which the impact attenuator is connected as a trailer to the vehicle, or in an operating position, in which the impact attenuator is connected as a rigid extension of the vehicle.

Impact attenuators are used, at e.g. roadwork areas, to protect road-users, men at work and equipment. The impact attenuators task is to, in a soft way, stop vehicles from entering the roadwork area. This is achieved by an attenuation device that dampens the force of collision from a colliding vehicle by deformation of the construction, e.g. by a metal construction with zones of deformation or an elastical construction of polymeric material.

Impact attenuators are generally difficult to transport because the distance between the vehicles rear axis and the rear point of the impact attenuator, the overhang, is long. A long overhang causes great problems in sharp bends, intersections, roundabouts etc. As the vehicle turns, the overhang sweeps over a large area outside the vehicle's own lane, and in some traffic environments, it may be difficult to transport the device. Another problem is that an impact attenuator arranged at the back of a vehicle affects the axle pressure. There is a great pressure on the rear axle and a small pressure on the front axle, which may make the steering difficult. These problems are solved by an impact device and a method disclosed in WO 01/87671 A1.

The present invention relates to improvements of the prior art. Known impact attenuators of this type shifts between a transport- and an operating position by moving the whole impact attenuator away from the vehicle. The drawback with this solution is that the turning radius is limited due to the fact that the force transferring beams may hit the vehicle. The invention solves this problem by arranging an extension device in the impact attenuator between a front part, fixedly connected to the vehicle, and an attenuating device.

The invention will now be described in more detail with reference to the following drawings:
- Fig. 1: shows an impact-attenuating device in transport position.
- Fig. 2: shows an impact-attenuating device in transport position from above.
- Fig. 3: shows turning in transport position from above.
- Fig. 4: shows section A-A in Fig. 1, front part and traffic routing board.
- Fig. 5: shows section B-B in Fig. 1, rear part.
- Fig. 6: shows the rear part in transport position.
- Fig. 7: shows section C-C in Fig. 6, rear part.
- Fig. 8: shows an impact-attenuating device in operating position.
- Fig. 9: shows an impact-attenuating device in operating position from above.
- Fig. 10: shows section D-D in Fig. 8, front part and traffic routing board.
- Fig. 11: shows section E-E in Fig. 8, rear part.
- Fig. 12: shows the rear part in operating position.
- Fig. 13: shows section F-F in Fig. 12, rear part.
- Fig. 14: shows a second embodiment of the extending device.
- Fig. 15: shows a first embodiment of the connection to a vehicle.
- Fig. 16: shows a second embodiment of the connection to vehicle.

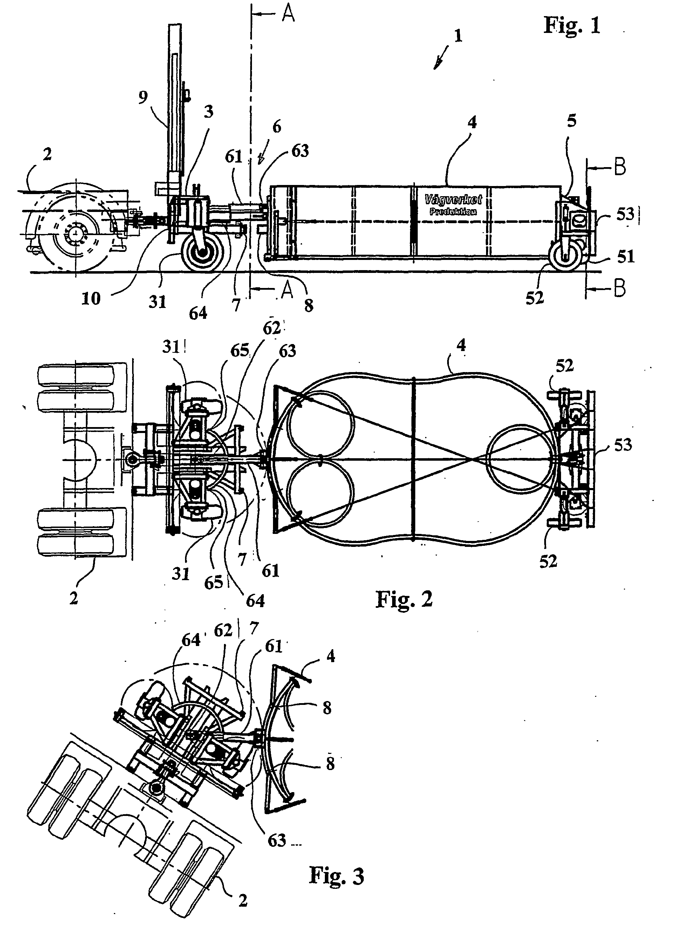

Fig. 1 discloses an impact-attenuating device (1) connected to a vehicle (2), preferably a lorry. The impact attenuator (1) comprises a front part (3), an attenuating device (4), a rear part (5), and an extending device (6). The front part (3) is connected to the vehicle (2) in order to transfer the forces of a collision from the impact-attenuating device to the vehicle during a collision. The front part (3) comprises two pivot wheels (31) with suspension, and a traffic routing board (9). Between the front part (3) and the attenuating device (4), an extension device (6) is arranged. The extension device (6) can be in a transport position or in an operating position. In the transport position, Figs. 1 and 2, the extension device (6) is in an extended state and the attenuating device (4) is pushed away from the front part (3). The attenuating device (4) is only connected to the front part (3) via the extension device (6). The attenuating device (4) is in the shown embodiment a ring of an elastic material, but it could also be of a different construction, e.g. a metal construction with deformation zones. Fig. 3 discloses the impact-attenuating device during a turn. Through a vertical joint (62) between the front part (3) and the extension device (6) the attenuating device (4) moves like a trailer. The extension device (6) is connected to the attenuating device (4) via a horizontal joint (63). In the transport position the attenuating device (4) hangs freely between the rear part (5) and the front part (3) and is not effected be any moment, except from the effect from it's own weight. This means that the attenuating device does not have to be designed to manage the moment forces and can therefore be made e.g. lighter.

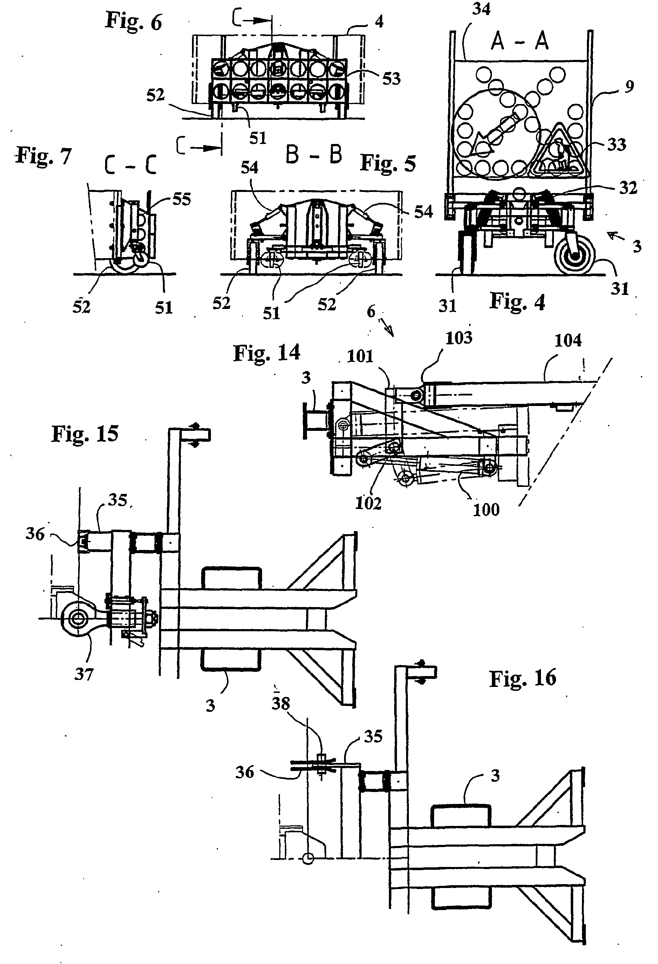

Fig. 4 discloses section A-A in Fig. 1. The front part (3) comprises two pivot wheels (31), with suspension (32), traffic routing boards (33), and a lowered light arrow (34).

The Figs. 5-7 show different sections of the rear part. Fig. 5 discloses the rear part without the collision plate (53). The two transport wheels (52) are down and the two operation wheels (51) are up. The transport wheels (52) are lifted before operation and are only used during transportation of the impact attenuator (1). In the disclosed embodiment a lifting device (54), comprising hydraulic cylinders is used to lift the transport wheels (52). At the same time as the transport wheels (52) leaves the road way two operation wheels (51) has been lowered down to the road way. During operation the operation wheels (51) are used. Fig. 6 discloses the collision plate (53) carrying all the functions necessary, e.g. direction indicator, brake light, position light and reverse light. Furthermore, it has an uneven surface to prevent a colliding vehicle from sliding of the collision plate and continuing along the impact attenuator.

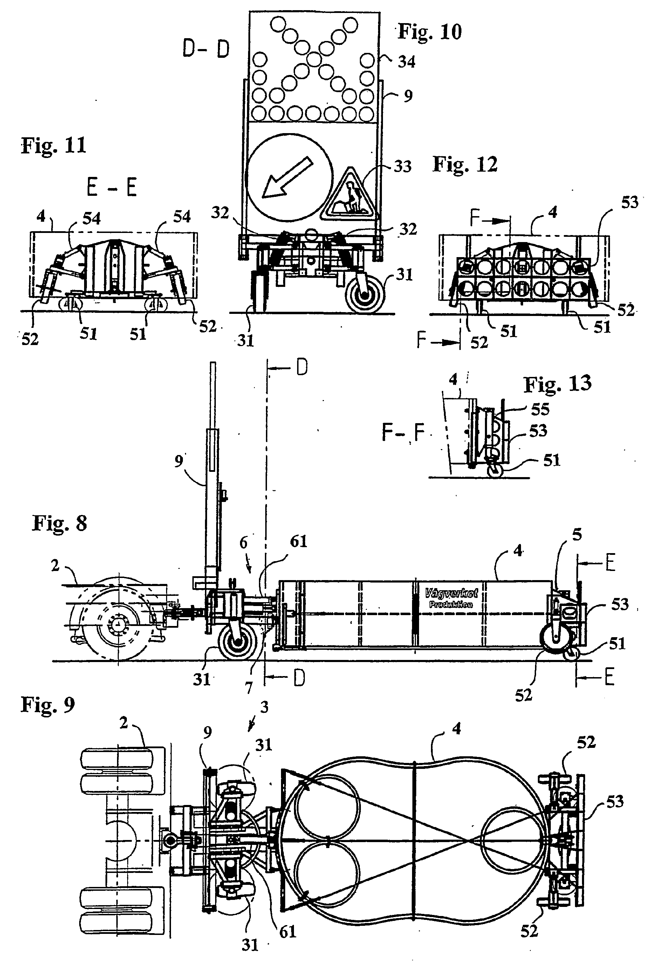

Figs. 8 and 9 show the impact attenuator (1) connected to a vehicle (2) in the operating position. The extension device (6,61) is in its shortened position with the front part (3) and the attenuating device (4) pushed against each other. The front part (3), attenuating device (4), and rear part (5) is a rigid extension of the vehicle (2). In order to secure the rigidity, the front part (3) and the attenuating device (4) are provided with a docking device (7,8).

Fig. 10 shows a section D-D of Fig. 8. The front part (3), here shown with a raised light arrow (34), so that the traffic signs (33) placed in front is clearly visible.

The Figs. 11-13 show different sections of the rear part in operating position. Fig. 11 discloses the rear part (5) without the collision plate (53). The two transport wheels (52) are up and the two operation wheels (51) are down. The operation wheels has a pivot function, i.e. they can turn around a vertical axis, this is indicated in Fig. 11 by showing the operation wheels in different positions. Furthermore, the operation wheels (51) are vertically adjustable by a hydraulic telescopic device (55). The shown embodiment has two operation wheels (51). Another embodiment is to arrange a single operation wheel in the middle.

Figs. 1-2 and 8-9 disclose a first embodiment of the extension device (6). The Figs. show an extension device (6) comprising a hydraulic telescopic device (61). One end of the telescopic device (61) is connected via a vertical joint (62) to the front part (3). It is around this joint (62) the attenuating device (4) turns during transport. The other end of the telescopic device (61) is connected to the attenuating device (4) via a horizontal joint (63). The telescopic device (61) rests on a half circle shaped support element (64). The support element (64) comprises end stops (65) in order to prevent the attenuating device (4) from hitting the front part (3) during sharp turns. The Figs. 1-2 and 7 disclose the impact attenuator (1) in transport position, i.e. the telescopic device (61) has moved the attenuating device (4) away from the front part (3). A docking device (7,8) is arranged on the attenuating device (4) and the front part (3) to ensure that, in operating state, the collision forces from the rear part (5) and the attenuating device (4) is transferred to the vehicle (2).

Fig. 14 discloses a second embodiment of the extension device. The extension device (6) comprises a hydraulic cylinder (100), via a first joint connected to the front part (3), and a second joint to a link arm (101). The link arm (101) is movably connected to the front part (3) via a joint (102) and a universal joint (103) connected to a boom (103), which is connected to the attenuating device (4). When the cylinder is in its shortened position (dashed line) the attenuation device (4) is pushed against the front part (3) as in Figs. 8 and 9. When the cylinder is in its extended position the boom (104) is lifted and pushed backwards in order to push the attenuating device (4) away from the front part (3) and thereby to the transport position.

Figs. 15 and 16 disclose two different embodiments of the connection between the front part (3) and the vehicle (2). The front part (3) is rigidly connected to the vehicle (2) and rolls on wheel with a pivot function. In Fig. 15 the impact attenuator is first connected to the vehicles towing device (37), thereafter the force transferring beams (35) is pushed against the frame side members (36) of the vehicle, and the towing device (37) is thereafter locked hydraulically or mechanically. In Fig. 16 the vehicles towing device is not used. Instead the force transferring beams (35) is directly connected to a coupling device on the side frame members (36) of the vehicle. The force transferring beams (35) is thereafter locked to the frame side members (36) with a locking device (38). Further embodiments of how to connect the front part to the vehicle are disclosed in the mentioned WO 01/87671 A1.

The invention described above discloses an impact-attenuating device, which can hold a transport position with the attenuating device hanging freely and flexible as a trailer, and an operating position with the attenuating device connected as a stiff extension, in sideway, of the vehicle. The impact attenuator, according to the invention, does not affect the axle pressure of the vehicle, i.e. the impact attenuator carries its own weight. Therefore, a vehicle with maximum allowable axle pressure, i.e. fully loaded, can be used.

The invention also discloses a rear part with liftable transport wheels and wheels without a pivot function. For safety reasons this is a better solution than prior locking of the pivot function, due to the fact that it is now impossible to drive with the pivot function in the transport position. With a locking of the pivot function, there is a possibility of signal error of human error, which may cause the locking to malfunction during transport.

A number of the impact attenuator device's functions are preferably controlled by hydraulic. One alternative is to connect the impact attenuator to the hydraulic system of the vehicle. However, the drawback is that the impact attenuator and the vehicle have to use the same hydraulic fluid. If several different vehicles use the impact attenuator this could be a problem. A second alternative is to arrange an internal hydraulic system (10) on the impact attenuator. The system is powered by the vehicles hydraulic system, but the hydraulic fluids from the different systems are never mixed.

The impact attenuator according to the invention can be modified and connected to the front of the vehicle during operation, as a protection against oncoming traffic.

## Claims

1. Impact attenuating device (1) for a vehicle (2), comprising a front part (3) with a wheel (31), for connection to the vehicle (2), preferably to the vehicles frame side member, such that during a collision against the attenuator (1) the forces are transferred to the vehicle (2), an attenuating part (4), a rear part (5), and an extension device **characterised by that** the extension device (6) is arranged between the front part (3) and the attenuating part (4); that the extension device (6) in a first position arranges the attenuator in a transport position, in which the attenuator (4) is extended away from the front part (3), and in a second position arranges the attenuator (4) in an operation position in which the attenuator (4) is arranged against the front part (3) such that forces from a collision against the attenuator are transferred to the vehicle.

2. Impact attenuating device (1) according to claim 1, **characterised by that** the attenuator (4) in the first position, transport position, is articulately arranged to the vehicle.

3. Impact attenuating device according to any of the claims 1-2, **characterised by** that the extension device (6) comprises a hydraulic telescopic device (61).

4. Impact attenuating device according to claim 3, **characterised by that** the telescopic device (61) is connected to the front part (3) via a vertical joint (62), and to the attenuating part (4) via a horizontal joint (63).

5. Impact attenuating device according to any of the claims 1-2, **characterised by that** the extension device (6) comprises a boom (104), arranged to a link arm (101), such that a cylinder (100) acting on the link arm moves the attenuating part (4) out to a transport position and/or pulls the attenuating part (4) into an operating position.

6. Impact attenuating device according to claim 5, **characterised by that** the boom (104) is connected to the front part (3) through a vertical- and horizontal joint (103), such that the attenuating part (4) is movable as a trailer.

7. Impact attenuating device according to any of the claims 1-6, **characterised by that** the rear part (5) comprises an operation wheel (51) with a pivot function, for use in the operating position, and two transport wheels (52) for use in the transport position.

8. Impact attenuating device according to claim 7, **characterised by that** the operating wheel (51) is in a lowered position in the operating position, and in a raised position in the transport position.

9. Impact attenuating device according to any of the claims 7-8, **characterised by that** the transportation wheels (52) are in a raised position in the operating position, and in a lowered position in the transport position.

10. Impact attenuating device according to any of the claims 1-9*,* **characterised by that** the impact attenuator (1) comprises an internal hydraulic system (10), such that the vehicles and impact attenuators hydraulic fluids are kept separate.

11. Impact attenuating device according to any of the claims 1-10, **characterised by that** the front part (3) comprises two wheels (31) with a pivot function.

12. Impact attenuating device according to any of the claims 1-11, **characterised by that** a docking device (7,8) is arranged in the front part (3) and in the attenuating part (4) to secure the rigidity of the device.

## Patentansprüche

1. Aufpralldämpfvorrichtung (1) für ein Fahrzeug (2), welche einen Vorderabschnitt (3) mit einem Rad (31), zur Verbindung mit dem Fahrzeug (2), vorzugsweise mit dem Rahmenseitenteil des Fahrzeugs, so dass die Kräfte während eines Zusammenstoßes gegen den Dämpfer auf das Fahrzeug (2) übertragen werden, einen Dämpfabschnitt (4), einen Heckabschnitt (5) und eine Verlängerungsvorrichtung aufweist, **dadurch gekennzeichnet, dass** die Verlängerungsvorrichtung (6) zwischen dem Vorderabschnitt (3) und dem Dämpfabschnitt (4) angeordnet ist; dass die Verlängerungsvorrichtung (6) in einer ersten Position den Dämpfer in einer Transportposition anordnet, in welcher der Dämpfer (4) von dem Vorderabschnitt (3) weg verlängert wird, und dass sie in einer zweiten Position den Dämpfer (4) in einer Betriebsposition anordnet, in welcher der Dämpfer gegen den Vorderabschnitt (4) angeordnet ist, so dass Kräfte von einem Zusammenstoß gegen den Dämpfer auf das Fahrzeug übertragen werden.

2. Aufpralldämpfvorrichtung nach Anspruch 1, **dadurch gekennzeichnet, dass** der Dämpfer (4) in der ersten Position, der Transportposition, ein Gelenk bildend an dem Fahrzeug angeordnet ist.

3. Aufpralldämpfvorrichtung nach einem der Ansprüche 1 bis 2, **dadurch gekennzeichnet, dass** die Verlängerungsvorrichtung (6) eine hydraulische Teleskopvorrichtung (61) aufweist.

4. Aufpralldämpfvorrichtung nach Anspruch 3, **dadurch gekennzeichnet, dass** die Teleskopvorrichtung (61) über ein senkrechtes Gelenk (62) mit dem Vorderabschnitt (3) und über ein waagrechtes Gelenk (63) mit dem Dämpfabschnitt (4) verbunden ist.

5. Aufpralldämpfvorrichtung nach einem der Ansprüche 1 bis 2, **dadurch gekennzeichnet, dass** die Verlängerungsvorrichtung (6) einen an einem Verbindungsarm (101) angeordneten Ausleger (104) aufweist, so dass ein auf den Verbindungsarm wirkender Zylinder (100) den Dämpfabschnitt (4) nach außen in eine Transportposition bewegt und/oder den Dämpfabschnitt in eine Betriebsposition zieht.

6. Aufpralldämpfvorrichtung nach Anspruch 5, **dadurch gekennzeichnet, dass** der Ausleger (104) durch ein senkrechtes und waagrechtes Gelenk (103) mit dem Vorderabschnitt (3) verbunden ist, so dass der Dämpfabschnitt (4) wie ein Anhänger bewegt werden kann.

7. Aufpralldämpfvorrichtung nach einem der Ansprüche 1 bis 6, **dadurch gekennzeichnet, dass** der Heckabschnitt (5) ein Betriebsrad (51) mit einer Schwenkfunktion zur Verwendung in der Betriebsposition und zwei Transporträder (52) zur Verwendung in der Transportposition aufweist.

8. Aufpralldämpfvorrichtung nach Anspruch 7, **dadurch gekennzeichnet, dass** das Betriebsrad (51) in der Betriebsposition in einer abgesenkten Position und in der Transportposition in einer erhöhten Position ist.

9. Aufpralldämpfvorrichtung nach einem der Ansprüche 7 bis 8, **dadurch gekennzeichnet, dass** die Transporträder (52) in der Betriebsposition in einer erhöhten Position und in der Transportposition in einer abgesenkten Position sind.

10. Aufpralldämpfvorrichtung nach einem der Ansprüche 1 bis 9, **dadurch gekennzeichnet, dass** der Aufpralldämpfer (1) ein internes Hydrauliksystem (10) aufweist, so dass die Hydraulikflüssigkeiten des Fahrzeugs und des Aufpralldämpfers getrennt gehalten werden.

11. Aufpralldämpfvorrichtung nach einem der Ansprüche 1 bis 10, **dadurch gekennzeichnet, dass** der Vorderabschnitt (3) zwei Räder (31) mit einer Schwenkfunktion aufweist.

12. Aufpralldämpfvorrichtung nach einem der Ansprüche 1 bis 11, **dadurch gekennzeichnet, dass** eine Kopplungsvorrichtung (7, 8) in dem Vorderabschnitt (3) und in dem Dämpfabschnitt (4) angeordnet ist, um die Steifheit der Vorrichtung sicher zu stellen.

## Revendications

1. Dispositif d'atténuation de choc (1) pour un véhicule (2), comprenant :
- une partie avant (3) avec une roue (31), reliée au véhicule (2), de préférence à l'élément latéral du châssis du véhicule, de telle sorte que, durant une collision contre l'atténuateur (1), les forces soient transférées au véhicule (2),
- une partie d'atténuation (4),
- une partie arrière (5), et
- un dispositif d'extension (6),
**caractérisé en ce que**
le dispositif d'extension (6) est agencé entre la partie avant (3) et la partie d'atténuation (4) ;
le dispositif d'extension (6) dans une première position dispose l'atténuateur dans une position de transport, dans laquelle l'atténuateur (4) est écarté de la partie avant (3), et dans une deuxième position dispose l'atténuateur (4) dans une position de fonctionnement dans laquelle l'atténuateur (4) est disposé contre la partie avant (3) de telle sorte que les forces provenant d'une collision contre l'atténuateur soient transférées au véhicule.

2. Dispositif d'atténuation de choc (1) selon la revendication 1,
**caractérisé en ce que**
l'atténuateur (4) dans la première position, celle de transport, est articulée au véhicule.

3. Dispositif d'atténuation de choc selon l'une des revendications 1 à 2,
**caractérisé en ce que**
le dispositif d'extension (6) comprend un dispositif hydraulique télescopique (61).

4. Dispositif d'atténuation de choc selon la revendication 3,
**caractérisé en ce que**
le dispositif télescopique (61) est relié à la partie avant (3) par un joint vertical (62), et à la partie d'atténuation (4) par un joint horizontal (63).

5. Dispositif d'atténuation de choc selon l'une des revendications 1 à 2,
**caractérisé en ce que**
le dispositif d'extension (6) comprend une flèche (104), disposée sur un bras d'articulation (101), de telle sorte qu'un vérin (100) agissant sur le bras d'articulation déplace la partie d'atténuation (4) vers une position de transport et/ou tire la partie d'atténuation (4) dans une position de fonctionnement.

6. Dispositif d'atténuation de choc selon la revendication 5,
**caractérisé en ce que**
la flèche (104) est reliée à la partie avant (3) par un joint vertical et horizontal (103), qui permet à la partie d'atténuation (4) de se déplacer comme une remorque.

7. Dispositif d'atténuation de choc selon l'une des revendications 1 à 6,
**caractérisé en ce que**
la partie arrière (5) comprend une roue de fonctionnement (51) ayant une fonction de pivot, utilisée dans la position de fonctionnement, et deux roues de transport (52) utilisées dans la position de transport.

8. Dispositif d'atténuation de choc selon la revendication 7,
**caractérisé par**
la roue de fonctionnement (51) abaissée dans la position de fonctionnement, et relevée dans la position de transport.

9. Dispositif d'atténuation de choc selon l'une des revendications 7 à 8,
**caractérisé par**
les roues de transport (52) relevées dans la position de fonctionnement, et abaissées dans la position de transport.

10. Dispositif d'atténuation de choc selon l'une des revendications 1 à 9,
**caractérisé en ce que**
l'atténuateur de choc (1) comprend un système hydraulique interne (10), qui sépare les fluides hydrauliques du véhicule et de l'atténuateur de choc.

11. Dispositif d'atténuation de choc selon l'une quelconque des revendications 1 à 10,
**caractérisé en ce que**
la partie avant (3) comprend deux roues (31) ayant une fonction de pivot.

12. Dispositif d'atténuation de choc selon l'une des revendications 1 à 11,
**caractérisé en ce qu'**
un dispositif d'amarrage (7, 8) agencé dans la partie avant (3) et dans la partie d'atténuation (4) assure la rigidité du dispositif.
